# EUROPEAN PATENT APPLICATION

(11) **EP 4 811 163 A1**
(43) Date of publication of application: **23.09.2026**
(21) Application number: 24890860.0
(22) Date of filing: 18.11.2024
(51) Int. Cl.: G06F 16/332, H04N 21/234

(54) **INFORMATION INTERACTION METHOD AND APPARATUS, AND DEVICE, MEDIUM AND PROGRAM PRODUCT**

(30) Priority: 17.11.2023 CN 202311544180
(71) Applicant: Beijing Zitiao Network Technology Co., Ltd., Beijing 100190 (CN)
(72) Inventor: FANG, Angxiang, Beijing 100028 (CN); JIANG, Xiangzhou, Beijing 100028 (CN); ZHU, Chengcheng, Beijing 100028 (CN); CHU, Ke, Beijing 100028 (CN); ZHANG, Lin, Beijing 100028 (CN); XI, Jie, Beijing 100028 (CN); WU, Xuheng, Beijing 100028 (CN)
(74) Representative: Grünecker Patent- und Rechtsanwälte PartG mbB
(86) International application number: PCT/CN2024/132770
(87) International publication number: WO 2025/103508

(57) **Abstract**

Embodiments of the present disclosure provide an information interaction method, apparatuses, a device, a medium and a program product. The method includes steps described below. Multimedia information is played, where the multimedia information includes target audio information; and interactive information corresponding to the target audio information is displayed in a case that the target audio information includes preset audio information.

## Description

### CROSS-REFERENCE TO RELATED APPLICATION(S)

The present application claims priority to Chinese Patent Application No. 202311544180.5, filed on November 17, 2023, and entitled "INFORMATION INTERACTION METHOD AND APPARATUS, AND DEVICE, MEDIUM AND PROGRAM PRODUCT", which is incorporated herein by reference in its entirety.

### TECHNICAL FIELD

Embodiments of the present disclosure relate to the technical field of information interaction and, in particular, to an information interaction method and apparatus, a device, a medium and a program product.

### BACKGROUND

With the rapid development of computer technology and Internet technology, various service scenarios are emerging endlessly. In a service scenario, scene functions and interaction manners are often enriched through a variety of associated scenario services.

### SUMMARY

The present disclosure provides an information interaction method and apparatus, a device, a medium and a program product.

In a first aspect, an embodiment of the present disclosure provides an information interaction method. The method includes:
playing multimedia information, where the multimedia information includes target audio information; and
displaying interactive information corresponding to the target audio information in a case that the target audio information includes preset audio information.

In a second aspect, an embodiment of the present disclosure further provides an information interaction apparatus. The apparatus includes:
a multimedia playback module, configured to play multimedia information, where the multimedia information includes target audio information; and
an interactive information display module, configured to display interactive information corresponding to the target audio information in a case that the target audio information includes preset audio information.

In a third aspect, an embodiment of the present disclosure further provides an electronic device. The electronic device includes:
one or more processors; and
a storage apparatus, configured to store one or more programs,
where when the one or more programs are executed by the one or more processors, the one or more processors are caused to implement the information interaction method according to any one of the embodiments of the present disclosure.

In a fourth aspect, an embodiment of the present disclosure further provides a storage medium including computer-executable instructions. The computer-executable instructions, when executed by a computer processor, are configured to perform the information interaction method according to any one of the embodiments of the present disclosure.

In a fifth aspect, an embodiment of the present disclosure further provides a computer program product. The computer program product includes a computer program, and the computer program, when executed by a processor, implements the information interaction method according to any one of the embodiments of the present disclosure.

### BRIEF DESCRIPTION OF THE DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
Fig. 1 is a schematic flowchart of an information interaction method according to an embodiment of the present disclosure;
Fig. 2 is a schematic diagram of a live streaming room page of a live streamer according to an embodiment of the present disclosure;
Fig. 3 is a schematic diagram of a live streaming room page of an audience end according to an embodiment of the present disclosure;
Fig. 4 is a schematic flowchart of another information interaction method according to an embodiment of the present disclosure;
Fig. 5 is a schematic diagram illustrating the structure of an information interaction apparatus according to an embodiment of the present disclosure; and
Fig. 6 is a schematic diagram illustrating the structure of an electronic device according to an embodiment of the present disclosure.

### DETAILED DESCRIPTION OF EMBODIMENTS

The embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the various steps described in the method implementations of the present disclosure may be executed in different orders and/or in parallel. Furthermore, the method implementations may include additional steps and/or omit execution of the steps shown. The scope of the present disclosure is not limited in this respect.

The term "include/comprise" and its variants used herein are open-ended inclusions, that is, "include/comprise but not limited to". The term "based on" is "at least partially based on". The term "an embodiment" means "at least one embodiment"; the term "another embodiment" means "at least one other embodiment"; the term "some embodiments" means "at least some embodiments". Relevant definitions of other terms will be given in the description below.

It should be noted that the concepts such as "first", "second" and the like mentioned in the present disclosure are only used to distinguish different apparatuses, modules or units, and are not used to limit the order of functions executed by these apparatuses, modules or units, or interdependence therebetween.

It should be noted that the modifiers "a", "an", "a plurality of" mentioned in the present disclosure are illustrative rather than restrictive, and those skilled in the art should understand that unless clearly indicated in the context, they should be understood as "one or more".

The names of messages or information exchanged between multiple apparatuses in the implementations of the present disclosure are only used for illustrative purposes, and are not used to limit the scope of these messages or information.

It may be understood that before using the technical solutions disclosed in the embodiments of the present disclosure, the user should be informed of the type, range of use, use scenarios, etc. of personal information involved in the present disclosure in an appropriate manner and the authorization of the user should be obtained according to relevant laws and regulations.

For example, in response to receiving an active request from a user, prompt information is sent to the user to clearly inform the user that the requested operation will require access to and use of the user's personal information. As such, the user may independently choose, based on the prompt information, whether to provide the personal information to software or hardware, such as an electronic device, an application, a server or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It may be understood that the above process of notifying and obtaining user authorization is only illustrative and does not limit the implementations of the present disclosure, and other manners that satisfy the

It may be understood that the data involved in the technical solution (including but not limited to the data itself, obtaining or use of the data) should comply with requirements of corresponding laws, regulations and related provisions.

Before the technical solution is introduced, an application scenario may be exemplarily described. The technical solution may be applied to any scenario involving information interaction. Exemplarily, when implementing interaction based on a service scenario, a service scenario display end usually interacts with a service scenario viewing end through voice-over; or the service scenario display end manually inputs interactive information through text input and displays the interactive information in a preset position to implement interaction with the service scenario viewing end. However, when the first manner is used for information interaction, there may be a problem that the interaction cannot be traced back and the service scenario viewing end may miss the interactive information easily. When the second manner is used for information interaction, in the case that the number of service scenario viewing ends is relatively large, there may be problems such as a low input rate of interactive information, failure to display interactive information in a timely manner, and a certain interaction time difference. As a result, the interaction effect is poor, the information interaction efficiency is low and the interaction experience is poor. In this regard, based on the technical solution of the embodiment of the present disclosure, in a process of playing multimedia information including target audio information, in a case that it is detected that the played target audio information includes preset audio information, interactive information may be generated based on the target audio information and the preset audio information, and the interactive information may be displayed. In this manner, an effect of identifying specific audio information and converting the identified audio information into interactive information in a specific format in the process of information interaction is achieved, thereby improving the information interaction efficiency and enhancing the interaction experience.

Before the technical solution is introduced, it should be noted that an apparatus for performing the information interaction method provided in the embodiment of the present disclosure may be integrated in application software supporting page display and information interaction functions, and the software may be installed in an electronic device. Optionally, the electronic device may be a mobile terminal, a PC, or the like. The application software may be a type of software for data exchange, and specific application software will not be described here redundantly as long as information interaction may be implemented. The application software may also be a specially developed application integrated in a software to implement interaction, or integrated in a corresponding page, and the interaction may be implemented through the page integrated in the PC.

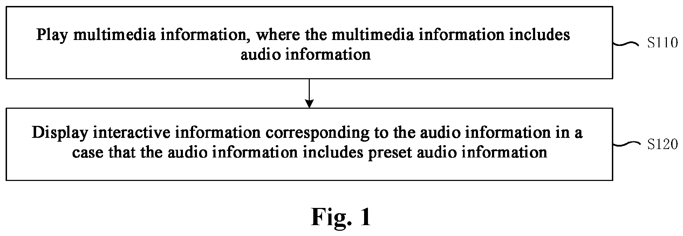

Fig. 1 is a schematic flowchart of an information interaction method according to an embodiment of the present disclosure. The embodiment of the present disclosure is applicable to any scenario where interactive information needs to be displayed, and the method may be performed by an information interaction apparatus, which may be implemented in the form of software and/or hardware. Optionally, the information interaction apparatus is implemented by an electronic device, which may be a mobile terminal, a PC, a server, or the like.

As shown in Fig. 1, the method in the embodiment may specifically include steps described below.

In S110, multimedia information is played, where the multimedia information includes target audio information.

The multimedia information may be understood as information that may be displayed based on an output device (a display or a speaker) of a terminal device. The multimedia information may be at least one of an image, a video, a text and an audio. Optionally, the multimedia information may include only target audio information; or the multimedia information may include both the target audio information and other multimedia information associated with the target audio information. The target audio information may be understood as audio information to be detected and recognized, and the audio information may be any audio information displayed based on information display information. It should be noted that different target audio information may correspond to different service scenarios. Exemplarily, in a live streaming scenario, the target audio information may be live streamer audio; in a game scenario, the target audio information may be sound effect information in the game scenario; and in an audio/video (e.g., a movie or a recorded video) playback scenario, the target audio information may be played audio information. Optionally, the other multimedia information associated with the target audio information may include a played image or video, for example, a live streaming video or any frame image in the played video; and the other multimedia information may also include text information corresponding to the target audio information, for example, if the target audio information is the played audio information, the text information corresponding to the target audio information may be a subtitle associated with the played audio information.

It should be noted that the multimedia information may be played on at least one server. Exemplarily, in the live streaming scenario, the multimedia information may be played on a live streamer end and/or an audience end. For different servers, corresponding playback trigger modes of the multimedia information are different. In order to introduce the playback trigger modes corresponding to the different servers more clearly, a live streaming scenario may be taken as an example to describe playback trigger processes corresponding to the different servers.

Optionally, for the audience end: before the multimedia information is played, the method further includes the step described below. In response to a viewing trigger operation input for a live streaming room, the multimedia information corresponding to the live streaming room is pulled from a preset server.

In the embodiment, the viewing trigger operation may be understood as an operation of entering a live streaming page of a corresponding live streaming room after the viewing trigger operation is triggered. Optionally, the viewing trigger operation may include triggering a live streaming viewing control or receiving a live streaming viewing instruction, etc. The preset server may be a stream ingestion server associated with a corresponding audience end.

In practical applications, in a case that the viewing trigger operation input by the audience for the live streaming room is detected, the trigger operation may be responded to and the preset server associated with the audience end may be determined. Then, the multimedia information corresponding to the triggered live streaming room may be pulled from the preset server and the pulled multimedia information may be played.

Optionally, for the live streamer end, the step in which the multimedia information is played includes the step described below. In response to a live streaming start trigger operation input for a live streaming room, the multimedia information is obtained and stream ingestion is performed from the multimedia information to the live streaming room based on a preset stream ingestion parameter so that the multimedia information is played in the live streaming room.

In the embodiment, the live streaming start trigger operation may be understood as an operation of entering a live streaming process after the live streaming start trigger operation is triggered. Optionally, the live streaming start trigger operation may include triggering a live streaming start control or receiving a live streaming start instruction, etc. The preset stream ingestion parameter may be understood as a parameter based on which a stream ingestion operation is performed. Optionally, the preset stream ingestion parameter may include a live streamer end address, resolution, bit rate and/or frame rate, etc.

In practical applications, in a case that the live streaming start trigger operation input for the live streaming room is detected, the live streaming start trigger operation may be responded to and the multimedia information may be obtained based on a multimedia information obtaining apparatus (e.g., a camera and/or a microphone) provided in a corresponding terminal. Furthermore, the preset stream ingestion parameter may be obtained and stream ingestion may be performed from the obtained multimedia information to the live streaming room based on the preset stream ingestion parameter so that the obtained multimedia information is played in the live streaming room.

In S120, interactive information corresponding to the target audio information is displayed in a case that the target audio information includes preset audio information.

The preset audio information may be preset key audio for detecting the displayed audio information. Optionally, the preset audio information may be a clip of continuous audio information or audio information including at least one keyword.

In the embodiment, the preset audio information includes reference audio information and associated audio information corresponding to the reference audio information, and the associated audio information has the same semantics as the reference audio information. Specifically, that the target audio information includes the preset audio information may be that the target audio information includes the reference audio information, or that the target audio information includes the associated audio information corresponding to the reference audio information. For example, the reference audio information is "thank you", and the associated information corresponding to the reference audio information may be "thanks", "many thanks" or "grateful", etc.

In the embodiment, the interactive information may be understood as information that may implement an interaction function. The interactive information may include any multimedia information that may be displayed in the live streaming room. Optionally, the interactive information includes at least one of interactive audio, interactive text, interactive image and interactive animation.

It should be noted that the preset audio information may correspond to the played content. That is, multiple playback content items may be determined in advance as preset playback content, preset audio information corresponding to each preset playback content item is determined, and an association relationship between the playback content and the preset audio information is established. Furthermore, in practical applications, in a case that it is detected that the played content is the preset playback content, the preset audio information corresponding to the playback content may be determined according to the pre-established association relationship. Then, the target audio information may be detected based on the preset audio information to determine whether the target audio information includes the preset audio information. Optionally, the preset playback content may include a movie clip, a news clip, a radio drama including audio information and a default picture, a recorded video, etc. Exemplarily, the preset playback content may be a radio drama including audio information and a default picture, corresponding preset audio information may be action information and scene information (e.g., go to place XX) corresponding to the action information, and the target audio information may be audio information in the radio drama. In a case that it is detected that the played content is the radio drama, the preset audio information corresponding to the radio drama may be determined. Then, the audio information in the radio drama may be detected according to the preset audio information to determine whether the played radio drama includes the preset audio information.

Alternatively, the preset audio information may correspond to an interactive operation associated with the playback content. That is, multiple interactive operations may be determined in advance as preset operations, preset audio information corresponding to each interactive operation is determined, and an association relationship between the interactive operation and the preset audio information is established. Furthermore, in practical applications, in a case that it is detected that the interactive operation associated with the playback content is the preset operation, the preset audio information corresponding to the interactive operation may be determined. Then, the played target audio information may be detected according to the preset audio information to determine whether the target audio information includes the preset audio information. Optionally, the interactive operation includes at least one of an operation of entering the live streaming room, a trigger operation for a preset control in the live streaming room, reception of live streaming feedback information for the live streaming room, completion of an operation of obtaining resources in the live streaming room, and a change in an account state of a live streaming viewing object. The preset audio information corresponding to the interactive operation may include operation feedback information and operation description information corresponding to the interactive operation, and the operation description information includes identification information of an initiating object and/or an operation object corresponding to the interactive operation. The operation feedback information may include a preset interactive keyword, and the preset interactive keyword may include at least one of welcome, thanks and congratulations. Exemplarily, in the live streaming scenario, the preset audio information determined to correspond to the interactive operation may be "Congratulations to live streaming viewing object A on the account level reaching level 20". In this case, the live streamer audio may be detected according to the preset audio information to determine whether the live streamer audio includes at least part of information in the preset audio information.

In practical applications, before whether the target audio information includes the preset audio information is determined, the preset audio information may also be determined in advance. Specifically, in the process of playing the multimedia information, if it is detected that the played multimedia information satisfies a preset detection trigger condition, the preset audio information corresponding to the multimedia information may be determined, and the target audio information is detected based on the preset audio information. Optionally, the page associated content may include content displayed on a page or an interactive operation associated with the page. Correspondingly, the preset detection trigger condition may be that the displayed content is preset content or that the interactive operation is a preset operation.

Furthermore, after the preset audio information is determined, the played target audio information may be periodically or continuously detected based on the preset audio information. Furthermore, in a case that it is detected that the target audio information includes the preset audio information, the target audio information may be intercepted based on the preset audio information and an intercepted audio clip may be obtained. Then, the interactive information may be generated based on the audio clip.

In the embodiment, the interactive information is generated based on the target audio information and/or the preset audio information. Optionally, in a case that the interactive information is generated based on the target audio information and the preset audio information, a process of generating the interactive information may include steps described below. An audio clip including the preset audio information in the target audio information is obtained and used as interactive audio; and the interactive information is generated based on the interactive audio.

The audio clip may be a clip obtained after the audio information is intercepted according to a preset interception range. The preset interception range may be a range that meets audio processing requirements. In the embodiment, the preset interception range may include an audio range of the preset audio information. The interactive audio may be understood as audio that may implement the interaction function. The interactive audio may be a clip of continuous and complete audio information or audio information composed of multiple discontinuous audio clips.

In practical applications, in a case that it is detected that the target audio information includes the preset audio information, the clip of continuous target audio information may include all information in the preset audio information, or all information in the preset audio information may be dispersed in multiple audio clips in the target audio information. Furthermore, the target audio information may be intercepted based on the display of the preset audio information in the target audio information, and the audio clip including the preset audio information in the target audio information may be intercepted to obtain the audio clip including the preset audio information, and the obtained audio clip may be used as the interactive audio.

It should be noted that one or more audio clips may be obtained. If one audio clip including the preset audio information is obtained, it may indicate that the audio clip includes all information in the preset audio information. If multiple audio clips including the preset audio information are obtained, it may indicate that the multiple audio clips may be concatenated together to obtain the complete preset audio information.

Optionally, the step in which the audio clip including the preset audio information in the target audio information is obtained and used as the interactive audio includes steps described below. An audio interception position corresponding to the target audio information is determined based on a position and/or time at which the preset audio information appears in the target audio information; and the audio clip is intercepted from the target audio information based on the audio interception position and used as the interactive audio.

The position at which the preset audio information appears in the target audio information may be understood as an audio track position at which the preset audio information appears in the target audio information. The time at which the preset audio information appears in the target audio information may include a start moment and an end moment at which the preset audio information appears in the target audio information. The audio interception position may be understood as an audio track position at which the target audio information is cropped, and the audio interception position may also be understood as an audio playback time stamp at which the target audio information is cropped.

In practical applications, in a case that it is determined that the target audio information includes the preset audio information, the target audio information may be cropped based on the preset audio information. Specifically, a position at which the preset audio information first appears in the target audio information and/or an audio playback time stamp corresponding to the first appearance of the preset audio information may be first determined. Then, the position and/or the playback time stamp may be used as an audio interception position. Furthermore, a position at which end audio information in the preset audio information appears in the target audio information and/or a playback time stamp corresponding to the appearance of the end audio information in the target audio information may be determined. Then, the position and/or the playback time stamp may be used as an audio interception position. Then, the target audio information may be cropped according to the determined audio interception positions, and a cropped clip may be used as the audio clip including the preset audio information and used as the interactive audio.

In practical applications, since linguistic expressions of viewers are different, the preset audio information may be dispersed in the target audio information in the form of clips. In this case, the target audio information may be intercepted in clips. Specifically, a position at which the preset audio information first appears in the target audio information may be first determined and used as a first audio interception position. Then, target audio information within a first preset duration from this position is detected, and if audio information that is not the preset audio information is detected in this clip of target audio information, a position at which the preset audio information last appears in the clip of target audio information may be determined and used as a second audio interception position. Then, the target audio information is cropped according to these two audio interception positions so that a first audio clip may be obtained. Furthermore, starting from the second audio interception position, the target audio information continues to be detected, and when the preset audio information is detected to appear again in the target audio information, a position at which the preset audio information appears this time may be used as a third audio interception position. Then, target audio information within a second preset duration from this position is detected, and if audio information that is not the preset audio information is detected in this clip of target audio information, a position at which the preset audio information last appears in this clip of target audio information may be determined and used as a fourth audio interception position. Then, the target audio information is cropped according to these two audio interception positions so that a second audio clip may be obtained. After that, the preceding operations are repeatedly performed until a position at which the end audio information in the preset audio information appears in the target audio information is determined and used as a last audio interception position. The target audio information is cropped according to the determined audio interception positions so that multiple audio clips may be obtained. Then, the obtained multiple audio clips are concatenated together according to playback time stamps, and the concatenated audio may be used as the interactive audio.

In the embodiment, the target audio information is cropped based on the preset audio information so that accuracy of the interactive audio is improved and the association between the preset audio information and the interactive audio is enhanced, thereby improving a display effect of the interactive information.

Optionally, in a case that the interactive information is generated based on the target audio information, at least part of audio clip in the target audio information may be obtained. Then, the interactive information corresponding to the target audio information is generated based on the audio clip.

Optionally, in a case that the interactive information is generated based on the preset audio information, the preset audio information included in the target audio information may be obtained. Then, the interactive information corresponding to the target audio information is generated based on the preset audio information.

In the embodiment, after the interactive audio is obtained, the interactive information may be generated based on the interactive audio and displayed.

It should be noted that an information type of the interactive information may include at least one of audio, text, image and video.

Optionally, in a case that the information type of the interactive information is audio, the step in which the interactive information is generated based on the interactive audio includes the step described below. The interactive audio is used as the interactive information.

In practical applications, after the interactive audio is obtained, the interactive audio may be used as the interactive information. Furthermore, when the interactive information is displayed, the interactive audio may be directly displayed; or an audio playback control including the interactive audio may be generated and displayed.

Optionally, in a case that the information type of the interactive information is text, the step in which the interactive information is generated based on the interactive audio includes steps described below. The interactive audio is converted into interactive text, and the interactive text is used as the interactive information.

The interactive text may be text information corresponding to the interactive audio. In the embodiment, the interactive audio may be converted into the interactive text through recognition of the interactive audio based on a preset text recognition algorithm and the recognition result, i.e. the text information, is used as the interactive text; or the interactive audio may be subjected to text recognition processing through other audio-to-text conversion manners to obtain the interactive text, which is not specifically limited in the embodiment of the present disclosure.

In practical applications, after the interactive audio is obtained, text recognition processing may be performed on the interactive audio to obtain recognized text information. Then, the text information may be used as the interactive text and displayed.

It should be noted that the interactive information may include both the interactive audio and the interactive text. Furthermore, when the interactive information is displayed, both the interactive audio and the interactive text may be displayed. The interactive information may include at least one type of information so that display diversity of the interactive information is enhanced, a display effect of the interactive information is improved and an information interaction effect is enhanced.

Exemplarily, the technical solution may include steps described below. In a case that it is detected that the interactive operation satisfies the preset operation, the live streamer end enables keyword detection and collects audio of a keyword and audio within a preset duration after the keyword. Then, the collected audio information is sent to a first server (e.g., an ASR server), the audio information is converted into text based on the first server and the text is sent to the live streamer end. Furthermore, the live streamer end may send the text corresponding to the audio information and interactive operation data to a second server (e.g., a service server) for matching so that a matched audience identification and corrected copy are obtained, and the audience identification and the corrected copy are fed back to the live streamer end. After that, the live streamer end generates a voice comment based on the corrected copy and locally saved audio data and sends the voice comment to the second server. Finally, the second server sends the voice comment to all viewers in the live streaming room through a message platform.

It should be noted that the interactive information may include at least one of audio, text, video, image and effect prop. Correspondingly, the step in which the interactive information is generated based on the audio clip may be implemented in multiple manners, which will be described separately below.

First manner: in a case that the interactive information includes audio information, the audio clip may be used as the interactive audio and the interactive audio may be used as the interactive information; or an audio playback control including the interactive audio may be generated and the audio playback control may be displayed as the interactive information.

Second manner: in a case that the interactive information includes text information, text recognition may be performed on the audio clip, the recognized text information may be used as the interactive text and the interactive text may be used as the interactive information.

Third manner: in a case that the interactive information includes image information, an image corresponding to a keyword in the audio clip may be called up from a material library in the application software and used as an interactive image. Alternatively, the audio clip may be processed based on a preset image generation algorithm so that a generated image is obtained and used as the interactive image. Then, the interactive image may be used as the interactive information.

Fourth manner: in a case that the interactive information includes video information, a video clip corresponding to the audio clip may be determined based on video information included in the multimedia information and used as an interactive video. Alternatively, a video is randomly called up from a pre-stored video library and used as the interactive video. Then, the interactive video may be used as the interactive information.

Fifth manner: in a case that the interactive information includes an effect prop, an effect prop corresponding to the audio clip may be determined from multiple preset effect props and used as an interactive effect. Then, the interactive effect may be used as the interactive information.

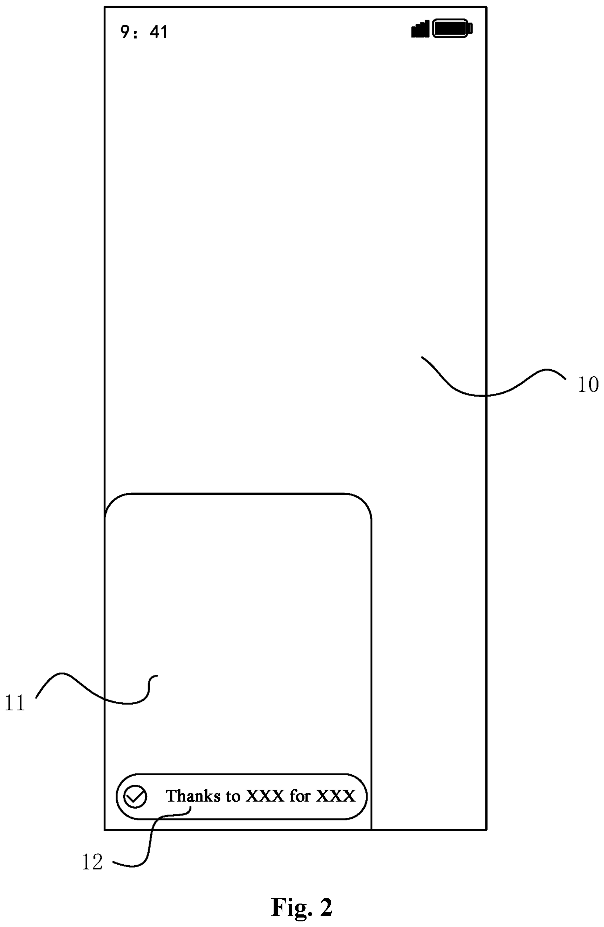

It should be noted that when the technical solution of the embodiment of the present disclosure is applied to the live streaming scenario, at least part of pages in corresponding live streaming pages may be different for the live streamer end and the live streaming viewing end. In the process of generating the interactive information based on the interactive audio, in order to enable the live streamer end to clearly and intuitively know the generation progress and the generation result (success or failure) of the interactive information, the generation progress and the generation result of the interactive information may be displayed in a preset position in the live streaming page corresponding to the live streamer end. In the process of generating the interactive information, the generation progress of the interactive information may be displayed in the preset position in a preset display form. The preset display manner may be any manner and optionally may be a progress bar, and the progress bar may be composed of characters included in the interactive information. That is, in the process of generating the interactive information, generated characters are sequentially displayed in the preset position according to the generation progress. After the process of generating the interactive information ends, in a case that the interactive information is successfully generated, a success identification and the generated interactive information may be displayed in the preset position, and then, the generated interactive information may be displayed in a preset format (e.g., an interactive comment format); in a case that the interactive information is not successfully generated, prompt information may be generated and displayed in the live streaming room. Exemplarily, the live streaming scenario may be taken as an example to describe the manner of displaying the process of generating the interactive information. Fig. 2 may be a schematic diagram of a live streaming room page corresponding to the live streamer end. As shown in Fig. 2, the live streaming room page includes a live streaming picture display area 10 and an information posting area 11. The information posting area 11 may be specifically a comment posting area of the live streaming room. In the process of generating the interactive information, the generation progress of the interactive information may be displayed in the information posting area 11 in the form of a comment box 12, and the display position may be a bottom area or a top area in the information posting area. Furthermore, in a case that the interactive information is successfully generated, a success identification and the generated interactive information (e.g., "Thank XXX for the XXX" in Fig. 2) may be displayed in the comment box 12.

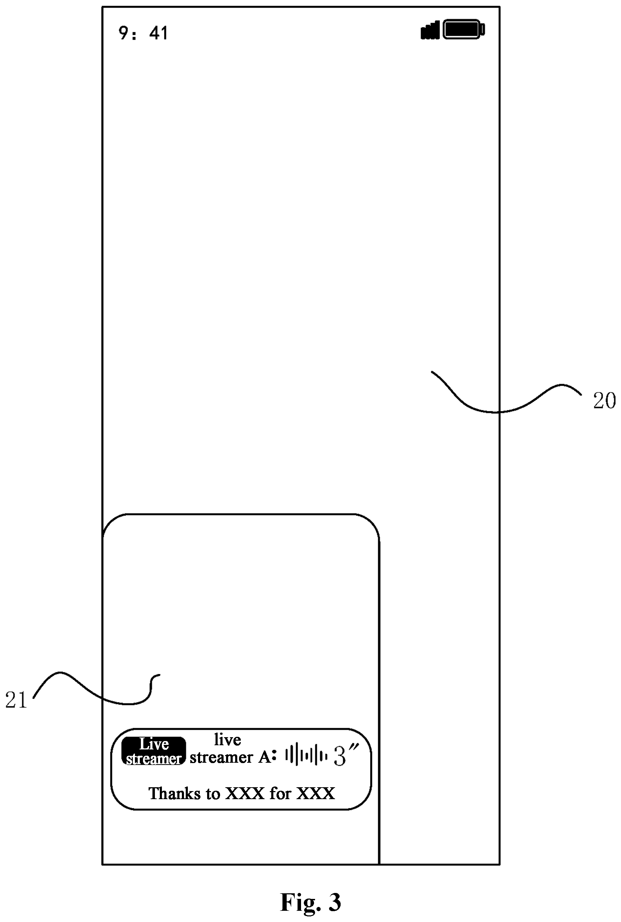

Furthermore, for the live streaming room page corresponding to the live streaming viewing end, in the case that the interactive information is successfully generated, the generated interactive information may be displayed on the live streaming room page and the generation process of the interactive information is not displayed. Exemplarily, still referring to the above example, Fig. 3 is a schematic diagram of a live streaming room page corresponding to the live streaming viewing end. As shown in Fig. 3, the live streaming room page includes a live streaming picture display area 20 and an information posting area 21. In the case that the interactive information is successfully generated, the generated interactive information may be displayed in the information posting area 21 in an interactive comment format. It may be seen from Fig. 3 that the displayed interactive information includes not only the generated interactive audio and interactive text but also a live streamer identification.

According to the technical solution of the embodiment of the present disclosure, the multimedia information including the target audio information is played so that an information interaction entry and an information interaction platform are provided; and furthermore, in a case that it is detected that the target audio information includes the preset audio information, the interactive information corresponding to the target audio information is displayed so that problems in the related art that interaction cannot be traced back, the interactive information is easily missed at the service scenario viewing end, the input rate of interactive information is low and the interactive information cannot be displayed in a timely manner are solved, and an effect of identifying specific audio information and converting the identified audio information into interactive information in a specific format in a process of information interaction is achieved, thereby improving the information interaction efficiency and enhancing the interaction experience.

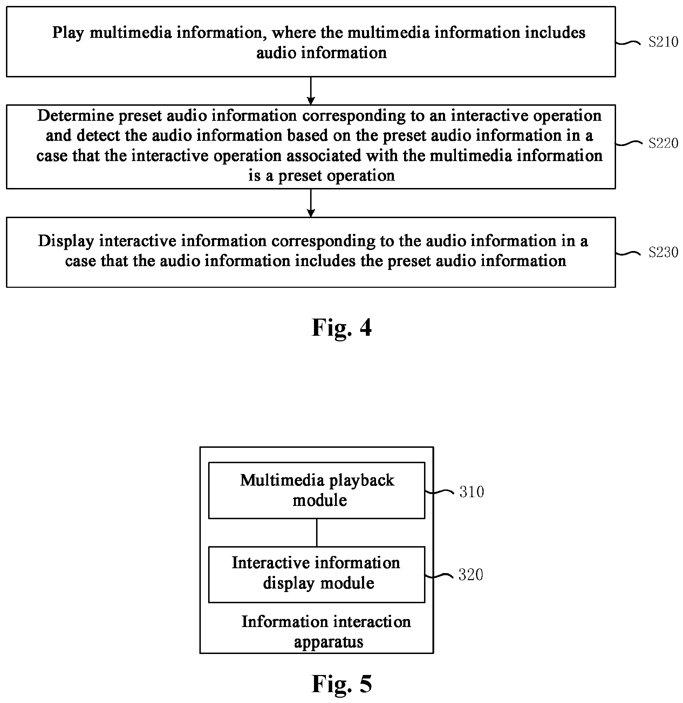

Fig. 4 is a schematic flowchart of another information interaction method according to an embodiment of the present disclosure. Based on the preceding embodiment, in the technical solution of the embodiment, the preset audio information is determined before the interactive information is generated based on the target audio information and the preset audio information; and then, the target audio information may be detected based on the preset audio information to determine whether the target audio information includes the preset audio information. For the specific implementation, reference may be made to the description of the embodiment. Technical features identical to or similar to those in the preceding embodiment will not be redundantly described here.

As shown in Fig. 4, the method in the embodiment may specifically include steps described below.

In S210, multimedia information is played, where the multimedia information includes target audio information.

In S220, preset audio information corresponding to an interactive operation is determined and target audio information is detected based on the preset audio information in a case that the interactive operation associated with the multimedia information is a preset operation.

The interactive operation may be understood as an interactive operation generated in the process of playing the multimedia information. The interactive operation may also be understood as an operation including an initiating object and an action object, that is, an operation in which at least two parties affect each other. The preset operation may be understood as a preset interactive operation for triggering audio information detection.

In the embodiment, the interactive operation is associated with the multimedia information. Exemplarily, taking the multimedia information including a live video stream of a live streaming room as an example, the associated interactive operation may include at least one of an operation of entering the live streaming room, a trigger operation for a preset control in the live streaming room, reception of live streaming feedback information for the live streaming room, completion of an operation of obtaining resources in the live streaming room, and a change in an account state of a live streaming viewing object. The reception of the feedback information for the live streaming room may include reception of comment information for the live streaming room, reception of positive review information for the live streaming room, reception of a trigger operation for a follow control corresponding to a live streamer to which the live streaming room belongs and reception of live streaming sharing information for the live streaming room, etc. The completion of the resource obtaining in the live streaming room may be understood as completion of a task of transferring a resource value, that is, a task of transferring a resource value to an interactive object provider in order to obtain an interactive object (e.g., an interactive gift, a recommended display object or a virtual resource). The change in the account state of the live streaming viewing object may include an object level of the live streaming viewing object being improved or a ranking order of the live streaming viewing object in the live streaming room being raised.

In the embodiment, the preset audio information corresponding to the interactive operation may be understood as audio information that may represent operation feature information associated with the interactive operation. Optionally, the preset audio information includes operation feedback information and operation description information corresponding to the interactive operation.

The operation feedback information may be understood as feedback information sent to an initiator of the interactive operation after the interactive operation is received. The operation feedback information may include a preset keyword, and for different interactive operations, corresponding preset keywords are also different. Exemplarily, still referring to the above example, if the interactive operation is the operation of entering the live streaming room, the preset keyword in the operation feedback information may be "welcome"; if the interactive operation is the reception of the feedback information for the live streaming room, the preset keyword may be "thanks"; if the interactive operation is the change in the account state of the live streaming viewing object, the preset keyword may be "congratulations".

The operation description information may be understood as information that describes the interactive operation as a whole. The operation description information includes identification information of the initiating object and/or the operation object corresponding to the interactive operation. The initiating object may be an object that performs the interactive operation. The identification information of the initiating object is an identification that represents identity information of the initiating object. The identification information of the initiating object may be an identification in any form and optionally may be an object avatar and/or an object nickname, etc. Exemplarily, in the live streaming scenario, the initiating object may be the live streaming viewing object. The identification information of the initiating object may be at least part of characters in a nickname of the live streaming viewing object. The identification information of the operation object may be understood as information for identifying the interactive operation. Exemplarily, if the interactive operation is the operation of completing the resource obtaining in the live streaming room, the identification information of the operation object may be a task identification (e.g., a name or abbreviation of an interactive gift).

In the embodiment, multiple types of interactive operations may be determined in advance and an information composition framework of preset audio information corresponding to each type of interactive operation is determined, where the information composition framework may include operation feedback information corresponding to the interactive operation and an operation description framework corresponding to the interactive operation. Furthermore, a type identification corresponding to the interactive operation may be determined and the type identification and the information composition framework of the corresponding preset audio information are stored in the terminal device. In practical applications, in a case that it is detected that the interactive operation is the preset operation, the type identification corresponding to the interactive operation may be obtained and the information composition framework of the preset audio information may be called up based on the type identification. Then, information to be supplemented in the information composition framework may be determined based on the interactive operation and added so that the preset audio information corresponding to the interactive operation may be obtained.

In practical applications, in the process of playing the multimedia information, multiple interactive operations associated with the multimedia information may be generated, and the preset operation may or may not exist among these interactive operations. Furthermore, in a case that the interactive operation associated with the multimedia information is detected, the interactive operation may be detected so that whether the interactive operation is the preset operation is determined. Furthermore, in a case that it is detected that the interactive operation is the preset operation, the corresponding preset audio information may be determined based on the interactive operation so that the preset audio information corresponding to the interactive operation may be obtained. Therefore, the target audio information may be detected based on the preset audio information.

In the embodiment, the preset audio information includes the operation feedback information and the operation description information corresponding to the interactive operation, and therefore, when the target audio information is detected based on the preset audio information, the target audio information may be detected based on the operation feedback information and the operation description information, and in a case that it is determined that the target audio information includes both the operation feedback information and the operation description information, it may be determined that the target audio information includes the preset audio information.

Optionally, the step in which the preset audio information corresponding to the interactive operation is determined and the target audio information is detected based on the preset audio information includes the steps described below. The operation feedback information and the operation description information corresponding to the interactive operation are determined and the target audio information is detected based on the operation feedback information; and in a case that the operation feedback information exists in the target audio information, the target audio information is detected based on the operation description information and a preset detection duration.

The preset detection duration may be any duration and optionally may be 1 minute, 5 minutes or 10 minutes.

In practical applications, in a case that it is determined that the interactive operation is the preset operation, the operation feedback information and the operation description information corresponding to the interactive operation may be determined. Furthermore, the played target audio information may be detected based on the operation feedback information, and the target audio information detected at this time may be the target audio information after the interactive operation is detected. After that, in a case that it is detected that the operation feedback information exists in the target audio information, a display moment of the target audio information may be used as a detection start moment. Then, target audio information within the preset detection duration after the detection start moment may be detected and whether the target audio information within the preset detection duration includes the operation description information is determined. Therefore, the process of detecting the target audio information based on the preset audio information may be completed. In this manner, an effect of triggering audio information detection based on keywords is achieved, intelligence of the audio information detection is enhanced and the detection efficiency of the audio information is improved.

In practical applications, the technical solution provided in the embodiment of the present disclosure may be applied to a live streaming scenario, and accordingly, the multimedia information includes a live video stream of a live streaming room and the target audio information includes live streamer audio. The interactive operation associated with the multimedia information includes at least one of an operation of entering the live streaming room, a trigger operation for a preset control in the live streaming room, reception of live streaming feedback information for the live streaming room, completion of an operation of obtaining resources in the live streaming room, and a change in an account state of a live streaming viewing object. The operation feedback information included in the preset audio information includes a preset interactive keyword, and the preset interactive keyword includes at least one of welcome, thanks and congratulations. Exemplarily, taking the target audio information as the live streamer audio and an interactive operation as object A entering a live streaming page as an example, preset audio information corresponding to the interactive operation may be "Welcome A to enter the live streaming room", where the operation feedback information may be "welcome", the operation description information may be "A enters the live streaming room", and the preset detection duration may be 5 minutes. After that, if audio information of "welcome" is detected in the live streamer audio displayed after the interactive operation is detected, a display moment of the audio information may be used as the detection start moment and the live streamer audio within 5 minutes after this moment is detected so that whether the live streamer audio within this duration includes audio information of "A enters the live streaming room" is determined.

In S230, the interactive information corresponding to the target audio information is displayed in a case that the target audio information includes the preset audio information.

According to the technical solution of the embodiment of the present disclosure, the multimedia information including the target audio information is played; furthermore, in a case that the interactive operation associated with the multimedia information is the preset operation, the preset audio information corresponding to the interactive operation is determined and the target audio information is detected based on the preset audio information; and finally, in a case that the target audio information includes the preset audio information, the interactive information corresponding to the target audio information is displayed so that an effect of triggering audio information detection based on the interactive operation to complete information interaction is achieved, intelligence of an information interaction function is enhanced and the association between the interactive operation and the interactive information is enhanced.

Fig. 5 is a schematic diagram illustrating the structure of an information interaction apparatus according to an embodiment of the present disclosure. As shown in Fig. 5, the apparatus includes a multimedia playback module 310 and an interactive information display module 320.

The multimedia playback module 310 is configured to play multimedia information, where the multimedia information includes target audio information. The interactive information display module 320 is configured to display interactive information corresponding to the target audio information in a case that the target audio information includes preset audio information.

On the basis of the preceding optional technical solutions, optionally, the interactive information is generated based on the target audio information and/or the preset audio information.

On the basis of the preceding optional technical solutions, optionally, the interactive information includes at least one of interactive audio, interactive text, interactive image and interactive animation.

On the basis of the preceding optional technical solutions, optionally, the apparatus further includes a preset audio information determination module.

The preset audio information determination module is configured to, before the interactive information is generated based on the target audio information and the preset audio information, determine preset audio information corresponding to an interactive operation associated with the multimedia information and detect the target audio information based on the preset audio information in a case that the interactive operation is a preset operation.

On the basis of the preceding optional technical solutions, optionally, the preset audio information includes operation feedback information and operation description information corresponding to the interactive operation, and the operation description information includes identification information of an initiating object and/or an operation object corresponding to the interactive operation.

On the basis of the preceding optional technical solutions, optionally, the preset audio information determination module includes an information determination unit and an information detection unit.

The information determination unit is configured to determine the operation feedback information and the operation description information corresponding to the interactive operation and detect the target audio information based on the operation feedback information.

The information detection unit is configured to detect the target audio information based on the operation description information and a preset detection duration in a case that the operation feedback information exists in the target audio information.

On the basis of the preceding optional technical solutions, optionally, the multimedia information includes a live video stream of a live streaming room, and the target audio information includes live streamer audio.

On the basis of the preceding optional technical solutions, optionally, the interactive operation includes at least one of an operation of entering the live streaming room, a trigger operation for a preset control in the live streaming room, reception of live streaming feedback information for the live streaming room, completion of an operation of obtaining resources in the live streaming room, and a change in an account state of a live streaming viewing object.

On the basis of the preceding optional technical solutions, optionally, the apparatus further includes a multimedia information pulling module. The multimedia information pulling module is configured at an audience end.

The multimedia information pulling module is configured to, before the multimedia information is played, pull the multimedia information corresponding to the live streaming room from a preset server in response to a viewing trigger operation input for the live streaming room.

On the basis of the preceding optional technical solutions, optionally, the multimedia playback module 310 includes a multimedia information obtaining unit, and the multimedia information obtaining unit is configured at a live streamer end.

The multimedia information obtaining unit is configured to, in response to a live streaming start trigger operation input for a live streaming room, obtain multimedia information and perform stream ingestion from the multimedia information to a target live streaming room based on a preset stream ingestion parameter so that the multimedia information is played in the target live streaming room.

According to the technical solution of the embodiment of the present disclosure, the multimedia information including the target audio information is played so that an information interaction entry and an information interaction platform are provided; and furthermore, in a case that the target audio information includes the preset audio information, the interactive information corresponding to the target audio information is displayed so that problems in the related art that interaction cannot be traced back, the interactive information is easily missed at the service scenario viewing end, and the input rate of interactive information is low and the interactive information cannot be displayed in a timely manner are solved, and an effect of identifying specific audio information and converting the identified audio information into interactive information in a specific format in a process of information interaction is achieved, thereby improving the information interaction efficiency and enhancing the interaction experience.

The information interaction apparatus provided in the embodiment of the present disclosure may perform the information interaction method provided in any embodiment of the present disclosure and has corresponding functional modules for performing the method and beneficial effects.

It should be noted that the various units and modules included in the preceding apparatuses are just divided according to functional logic but are not limited to such division, as long as the corresponding functions may be implemented. Furthermore, the specific names of the functional units are just for distinguishing between each other but not to limit the protection scope of the embodiments of the present disclosure.

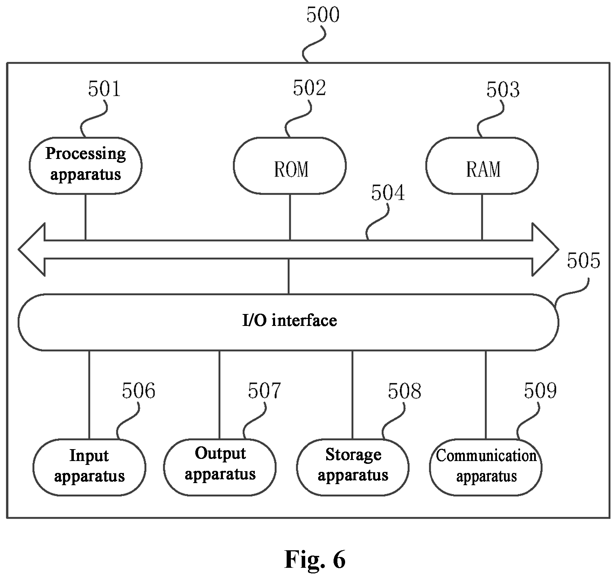

Fig. 6 is a schematic diagram illustrating the structure of an electronic device according to an embodiment of the present disclosure. Reference is made to Fig. 6 below, which illustrates a schematic diagram illustrating the structure of an electronic device (e.g., a terminal device or a server in Fig. 6) 500 suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer, a portable multimedia player (PMP), an in-vehicle terminal (e.g., an in-vehicle navigation terminal), etc., and stationary terminals such as a digital TV, a desktop computer, etc. The electronic device shown in Fig. 6 is merely an example and should not impose any limitation on the function and scope of use of the embodiments of the present disclosure.

As shown in Fig. 6, the electronic device 500 may include a processing apparatus (e.g., a central processing unit, a graphics processing unit, etc.) 501, which may perform various appropriate actions and processing according to a program stored in a read-only memory (ROM) 502 or a program loaded from a storage apparatus 508 into a random access memory (RAM) 503. The RAM 503 further stores various programs and data required for operations of the electronic device 500. The processing apparatus 501, the ROM 502 and the RAM 503 are interconnected by means of a bus 504. An input/output (I/O) interface 505 is also connected to the bus 504.

Usually, the following apparatuses may be connected to the I/O interface 505: an input apparatus 506 including, for example, a touch screen, a touchpad, a keyboard, a mouse, a camera, a microphone, an accelerometer, a gyroscope, etc.; an output apparatus 507 including, for example, a liquid crystal display (LCD), a speaker, a vibrator, etc.; the storage apparatus 508 including, for example, a magnetic tape, a hard disk, etc.; and a communication apparatus 509. The communication apparatus 509 may allow the electronic device 500 to be in wireless or wired communication with other devices to exchange data. Although Fig. 6 shows the electronic device 500 having various apparatuses, it should be understood that it is not required to implement or provide all of the shown apparatuses. Alternatively, more or fewer apparatuses may be implemented or provided.

In particular, according to the embodiments of the present disclosure, the process described above with reference to the flowcharts may be implemented as a computer software program. For example, the embodiments of the present disclosure include a computer program product, which includes a computer program carried on a non-transitory computer-readable medium, where the computer program contains program code for performing the method shown in the flowchart. In such an embodiment, the computer program may be downloaded and installed from a network via the communication apparatus 509, or installed from the storage apparatus 508, or installed from the ROM 502. When the computer program is executed by the processing apparatus 501, the preceding functions defined in the method of the embodiments of the present disclosure are executed.

The names of messages or information exchanged between multiple apparatuses in the implementations of the present disclosure are only used for illustrative purposes, and are not used to limit the scope of these messages or information.

The electronic device provided in the embodiment of the present disclosure belongs to the same inventive concept as the information interaction method provided in the preceding embodiments. For technical details not described in detail in this embodiment, reference may be made to the preceding embodiments, and this embodiment has the same beneficial effects as the preceding embodiments.

An embodiment of the present disclosure provides a computer storage medium storing a computer program which, when executed by a processor, implements the information interaction method provided in the preceding embodiments.

It should be noted that the computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus or device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium including or storing a program, where the program may be used by or in combination with an instruction execution system, apparatus or device. In the present disclosure, the computer-readable signal medium may include a data signal propagated on a baseband or as a part of a carrier, where computer-readable program code is carried in the data signal. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium, and the computer-readable signal medium may send, propagate or transmit a program used by or in combination with an instruction execution system, apparatus or device. The program code contained on the computer-readable medium may be transmitted in any suitable medium, including but not limited to a wire, an optical cable, a radio frequency (RF), or any suitable combination thereof.

In some implementations, a client and a server may communicate using any currently known or future developed network protocol, such as the HyperText Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The computer-readable medium may be contained in the electronic device or may exist alone without being assembled into the electronic device.

The computer-readable medium carries one or more programs which, when executed by the electronic device, cause the electronic device to: play multimedia information, where the multimedia information includes target audio information; and display interactive information corresponding to the target audio information in a case that the target audio information includes preset audio information.

The computer program code for performing the operations of the present disclosure may be written in one or more programming languages or a combination thereof, where the programming languages include, but are not limited to, object-oriented programming languages such as Java, Smalltalk, C++, and include conventional procedural programming languages such as "C" language or similar programming languages. The program code may be executed entirely on a computer of a user, partly executed on a computer of a user, executed as an independent software package, partly executed on a computer of a user and partly executed on a remote computer, or entirely executed on a remote computer or a server. In the case involving the remote computer, the remote computer may be connected to the computer of the user through any kind of network, including a local area network (LAN) or a wide area network (WAN), or it may be connected to an external computer (for example, connected via the Internet using an Internet service provider).

The flowcharts and block diagrams in the drawings illustrate the possibly implemented architectures, functions and operations of the system, the method and the computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units involved in the embodiments of the present disclosure may be implemented in a form of software or in a form of hardware. The name of the unit does not constitute a limitation on the unit itself under certain circumstances, and for example, the first obtaining unit may also be described as "a unit for obtaining at least two internet protocol addresses".

The functions described above herein may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD) and more.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electrical, magnetic, optical, electromagnetic, infrared, or semiconductor system, apparatus or device, or any suitable combination thereof. More specific examples of the machine-readable storage medium would include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, [Example 1] provides an information interaction method, including:
playing multimedia information, where the multimedia information includes target audio information; and
displaying interactive information corresponding to the target audio information in a case that the target audio information includes preset audio information.

According to one or more embodiments of the present disclosure, [Example 2] provides the method of Example 1, further including:
optionally, the interactive information is generated based on the target audio information and/or the preset audio information.

According to one or more embodiments of the present disclosure, [Example 3] provides the method of Example 2, further including:
optionally, the interactive information includes at least one of interactive audio, interactive text, interactive image and interactive animation.

According to one or more embodiments of the present disclosure, [Example 4] provides the method of Example 1, further including:
optionally, before the interactive information corresponding to the target audio information is displayed, the method further includes:
determining preset audio information corresponding to an interactive operation associated with the multimedia information and detecting the target audio information based on the preset audio information in a case that the interactive operation is a preset operation.

According to one or more embodiments of the present disclosure, [Example 5] provides the method of Example 4, further including:
optionally, the preset audio information includes operation feedback information and operation description information corresponding to the interactive operation, and the operation description information includes identification information of an initiating object and/or an operation object corresponding to the interactive operation.

According to one or more embodiments of the present disclosure, [Example 6] provides the method of Example 5, further including:
optionally, determining the preset audio information corresponding to the interactive operation and detecting the target audio information based on the preset audio information includes:
determining the operation feedback information and the operation description information corresponding to the interactive operation and detecting the target audio information based on the operation feedback information; and
detecting the target audio information based on the operation description information and a preset detection duration in a case that the operation feedback information exists in the target audio information.

According to one or more embodiments of the present disclosure, [Example 7] provides the method of Example 5, further including:
optionally, the multimedia information includes a live video stream of a live streaming room, and the target audio information includes live streamer audio.

According to one or more embodiments of the present disclosure, [Example 8] provides the method of Example 7, further including:
optionally, the interactive operation includes at least one of an operation of entering the live streaming room, a trigger operation for a preset control in the live streaming room, reception of live streaming feedback information for the live streaming room, completion of an operation of obtaining resources in the live streaming room, and a change in an account state of a live streaming viewing object.

According to one or more embodiments of the present disclosure, [Example 9] provides the method of Example 1, further including:
optionally, the method is applied to an audience end, and before the multimedia information is played, the method further includes:
pulling the multimedia information corresponding to the live streaming room from a preset server in response to a viewing trigger operation input for the live streaming room.

According to one or more embodiments of the present disclosure, [Example 10] provides the method of Example 1, further including:
optionally, the method is applied to a live streamer end, and playing the multimedia information includes:
in response to a live streaming start trigger operation input for a live streaming room, obtaining multimedia information and performing stream ingestion from the multimedia information to a target live streaming room based on a preset stream ingestion parameter so that the multimedia information is played in the target live streaming room.

According to one or more embodiments of the present disclosure, [Example 11] provides an information interaction apparatus, including:
a multimedia playback module, configured to play multimedia information, where the multimedia information includes target audio information; and
an interactive information display module, configured to display interactive information corresponding to the target audio information in a case that the target audio information includes preset audio information.

The preceding description only illustrates preferred embodiments of the present disclosure and applied technical principles. Those skilled in the art should understand that the scope of disclosure involved in the present disclosure is not limited to the technical solution formed by a specific combination of the preceding technical features, and should also cover other technical solutions formed by any combination of the preceding technical features or equivalent features thereof without departing from the preceding concept of disclosure. For example, a technical solution formed by a replacement of the preceding features with technical features with similar functions disclosed in the present disclosure (but not limited thereto) also falls within the scope of the present disclosure.

Furthermore, although the operations are depicted in a specific order, it should not be understood as requiring these operations to be performed in the specific order shown or in a sequential order. Under specific circumstances, multitasking and parallel processing may be advantageous. Similarly, although several specific implementation details are included in the preceding discussion, these details should not be construed as limiting the scope of the present disclosure. Some features that are described in the context of separate embodiments may alternatively be implemented in combination in a single embodiment. In contrast, various features described in the context of a single embodiment may also be implemented in multiple embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are only exemplary forms for implementing the claims.

## Claims

1. An information interaction method, comprising:
playing multimedia information, wherein the multimedia information comprises target audio information; and
displaying, in a case that the target audio information comprises preset audio information, interactive information corresponding to the target audio information.

2. The information interaction method of claim 1, wherein the interactive information is generated based on the target audio information and/or the preset audio information.

3. The information interaction method of claim 2, wherein the interactive information comprises at least one of interactive audio, interactive text, interactive image, or interactive animation.

4. The information interaction method of claim 1, wherein before displaying the interactive information corresponding to the target audio information, the method further comprises:
determining, in a case that an interactive operation associated with the multimedia information is a preset operation, preset audio information corresponding to the interactive operation, and detecting the target audio information based on the preset audio information.

5. The information interaction method of claim 4, wherein the preset audio information comprises operation feedback information and operation description information corresponding to the interactive operation, and the operation description information comprises identification information of an initiating object and/or an operation object corresponding to the interactive operation.

6. The information interaction method of claim 5, wherein determining the preset audio information corresponding to the interactive operation, and detecting the target audio information based on the preset audio information comprises:
determining the operation feedback information and the operation description information corresponding to the interactive operation, and detecting the target audio information based on the operation feedback information; and
detecting, in a case that the operation feedback information exists in the target audio information, the target audio information based on the operation description information and a preset detection duration.

7. The information interaction method of claim 5, wherein the multimedia information comprises a live video stream of a live streaming room, and the target audio information comprises live streamer audio.

8. The information interaction method of claim 7, wherein the interactive operation comprises at least one of an operation of entering the live streaming room, a trigger operation for a preset control in the live streaming room, reception of live streaming feedback information for the live streaming room, completion of an operation of obtaining resources in the live streaming room, or a change in an account state of a live streaming viewing object.

9. The information interaction method of claim 1, wherein the method is applied to an audience end, and wherein before playing the multimedia information, the method further comprises:
pulling, in response to a viewing trigger operation input for the live streaming room, the multimedia information corresponding to a live streaming room from a preset server.

10. The information interaction method of claim 1, wherein the method is applied to a live streamer end, and wherein playing the multimedia information comprises:
acquiring, in response to a live streaming start trigger operation input for a live streaming room, multimedia information, and performing stream ingestion on the multimedia information to the live streaming room based on a preset stream ingestion parameter to play the multimedia information in the live streaming room.

11. An information interaction apparatus, comprising:
a multimedia playback module, configured to play multimedia information, wherein the multimedia information comprises target audio information; and
an interactive information display module, configured to display, in a case that the target audio information comprises preset audio information, interactive information corresponding to the target audio information.

12. An electronic device, comprising:
one or more processors; and
a memory, configured to store one or more programs,
wherein the one or more programs, when executed by the one or more processors, cause the one or more processors to implement the information interaction method according to any of claims 1 to 10.

13. A storage medium, comprising computer-executable instructions, wherein the computer-executable instructions, when executed by a computer processor, are configured to perform the information interaction method according to any of claims 1 to 10.

14. A computer program product, wherein the computer program product comprises a computer program, and the computer program, when executed by a processor, implements the information interaction method according to any of claims 1 to 10.
